# EUROPEAN PATENT APPLICATION

(11) **EP 2 432 199 A1**
(43) Date of publication of application: **21.03.2012**
(21) Application number: 10177377.8
(22) Date of filing: 17.09.2010
(51) Int. Cl.: H04M 1/50, H04M 1/725, G06F 3/048

(54) **Method and system for inputting DTMF tones from a smart phone keyboard**

(71) Applicant: RESEARCH IN MOTION LIMITED, Waterloo, Ontario N2L 3W8 (CA)
(72) Inventor: Zheng, Yongqian, Stevenson Ranch, CA 91381 (US)
(74) Representative: Phillips, Emily Elizabeth

(57) **Abstract**

A smart phone is provided. The smart phone comprises a dual-tone multi-frequency (DTMF) key configured such that when the DTMF key is activated and when a key on a keypad on the smart phone is selected, the smart phone generates and transmits a DTMF tone corresponding to the selected key.

## Description

### BACKGROUND

Dual-tone multi-frequency (DTMF) dialing can be used to send data from a telephone or other telecommunications device. Pressing a key on a DTMF-enabled keypad or dial pad generates a multi-frequency tone that can be transmitted through a telephone line to a switching center or other destination. The different tones generated by different keys can allow a user to input different information and can cause different actions to occur at the destination. For example, DTMF tones might allow a user to navigate through an automated call answering system, where pressing the "1" key might allow the user to select a first option, pressing the "2" key might allow the user to select a second option, and so on. DTMF-based dialing systems might be referred to as Touch-Tone systems or might be known by other names. As used herein, the term "DTMF" will refer to any system whereby an activation of an input on a telecommunications device generates a tone that represents a data input. The term "DTMF tone" will refer to any such tone, and any user action that can generate a DTMF tone will be referred to as a DTMF input.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates a smart phone, according to an implementation of the disclosure.

Figure 2 is a flowchart for a method for a smart phone to receive a data input, according to an implementation of the disclosure.

Figure 3 illustrates a processor and related components suitable for implementing the present disclosure.

### DETAILED DESCRIPTION

It should be understood at the outset that although illustrative examples of one or more implementations of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

The term "smart phone" might be used to refer to any telecommunications device capable of executing a plurality of applications, each of which might present a different display screen to a user. For example, a smart phone user might be able to send and receive emails in an email screen, browse the web in a web browser screen, and engage in voice-based phone calls in a home screen or voice calling screen. When a voice calling feature is active, the keys on the smart phone's dial pad might be used to input a phone number in order to establish a voice call and/or to enter DTMF inputs.

DTMF inputs can typically be made only when the voice calling screen is displayed. After a voice call has been established, if the display is switched to a screen other than the voice calling screen, any input into the keypad will be accepted as the standard input for the selected key rather than the DTMF input associated with that key. For example, after a voice call has been established, a smart phone user might switch to an email application. Any input into the dial pad at that point would be considered an input into the email application rather than a DTMF. input. If the user pressed the "2" key, for instance, the number "2" might appear in the email application rather than the DTMF tone associated with the "2" key being generated and transmitted.

There may be occasions, however, when a user might wish to make a DTMF input when a screen other than the voice calling screen is active. For example, an email message might contain a string of digits that the user wishes to input as DTMF inputs, and the user might wish to input the digits while reading the digits from the email message. However, pressing the keys associated with the digits while the email screen is displayed will result in the digits being accepted as inputs into the email application. In order to input the digits as DTMF inputs, the user might need to write down or memorize the digits while in the email screen, switch to the voice calling screen, and then enter the written or memorized digits. Recording the digits in one screen and then switching to another screen to enter the digits can be inconvenient and prone to error.

In an implementation, DTMF inputs can be made into a smart phone while a screen other than the voice calling screen is displayed. To allow these DTMF inputs, an input mechanism that can be referred to as a "DTMF key" can be provided on a smart phone. When the DTMF key is activated, regardless of the screen that is currently on display on the smart phone, pressing any key that is traditionally capable of generating a DTMF tone will cause the generation and transmission of the DTMF tone traditionally associated with that key.

Activation of the DTMF key can be said to place the smart phone in a DTMF entry mode. When the smart phone is in the DTMF entry mode, any DTMF-enabled key that is pressed or otherwise selected will generate and transmit the DTMF tone that is traditionally associated with that key. When the user is finished entering DTMF inputs, the user might repeat the action that placed the smart phone in the DTMF entry mode or take some other action to indicate that DTMF inputs will no longer be made. The smart phone could then exit the DTMF entry mode and revert to accepting key entries in the manner traditionally appropriate for the application that is executing.

In some implementations, the DTMF key can be a "hard key" dedicated for a single purpose. For example, the DTMF key might be a push button that is added to the keypad or elsewhere on a smart phone in addition to the traditionally existing push buttons. Pressing this hard key might temporarily place the smart phone in the DTMF entry mode. Alternatively, the DTMF key can be a combination of simultaneous or sequential key presses on traditionally existing push buttons. For example, the simultaneous pressing of the "D" key and the "K" key, or some other key combination, could be considered an activation of the DTMF key and could place the smart phone in the DTMF entry mode. Pressing the hard key or the key combination again could terminate the DTMF entry mode. In another alternative, pressing and holding the DTMF key or key combination might place the smart phone in the DTMF entry mode. Any input that is made while the DTMF key is being held could be taken by the smart phone as a DTMF input.

In other implementations, the DTMF key can be a "soft key" or menu item that is programmatically controlled. For example, the DTMF key might be an appropriately labeled button area or icon in a touch screen, and touching the soft button or icon could place the smart phone in the DTMF entry mode. Alternatively, the DTMF key can be an item in a menu that could appear on any screen of a smart phone. For example, selecting a menu item such as "Options" could cause a submenu to appear in which a submenu item such as "DTMF keys" appears. Selecting this submenu item could be considered an activation of the DTMF key and could place the smart phone in the DTMF entry mode. Selecting the soft key or icon again or deselecting the menu item could terminate the DTMF entry mode. One of skill in the art might recognize other input mechanisms that could be considered an activation of the DTMF key and that could place the smart phone in the DTMF entry mode.

Alternatively, rather than the activation of the DTMF key temporarily placing the smart phone in the DTMF entry mode, the activation of the DTMF key could cause a virtual keypad or dial pad to appear on the display of the smart phone, and DTMF inputs could be made into the virtual keypad or dial pad. For example, pressing a hard key, soft key, or key combination, selecting a menu item, or taking some other DTMF key activation step could cause an image of a keypad to appear on top of or in place of the previously existing display screen on the smart phone. The user could then use touch screen presses, cursor movements, or other input techniques to select the keys in this virtual keypad, and the selection of one of these virtual keys could be accepted by the smart phone as a DTMF input. When the user is finished entering DTMF tones, the user could take an appropriate action to close the virtual keypad, and the display screen for the previously executing application could reappear.

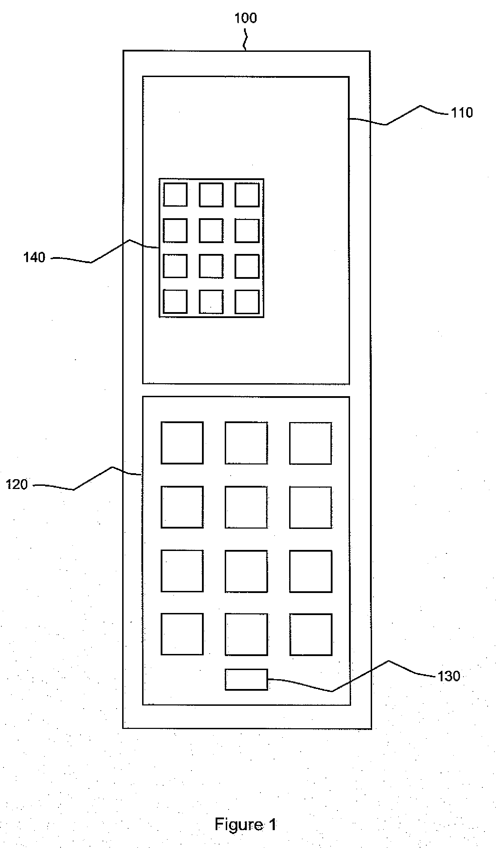

Figure it illustrates a telecommunications device 100 that can accept DTMF inputs when a screen other than the traditional voice calling screen is displayed. The device 100 is a smart phone that can execute a plurality of applications and includes a display area 110 and a keypad 120 that contains a plurality of keys. As with traditional smart phones, when a voice call has been established on the device 100 and a display associated with a voice calling application is displayed in the display area 110, the keys in the keypad 120 can accept DTMF inputs from a user. In an implementation, a DTMF key 130 is also present to allow the device 100 to accept DTMF inputs when a display other than the display associated with the voice calling application is active in the display area 110. In the implementation of Figure 1, the DTMF key 130 is a dedicated hard key, but in other implementations the DTMF key 130 might be any of the input mechanisms described above.

As an example of how the DTMF key 130 might be used, it can be assumed that a user of the device 100 is attempting to join a conference call. To be granted access to the conference call, the user might need to enter a multi-digit access code by means of a series of DTMF inputs. The access code may have been previously sent to the user in an email. The user might use a voice calling application or feature to establish a voice call into a conference bridge and might then be asked to enter the access code. The user might then switch to an email application, open the email that contains the access code, and read the access code. Traditionally, from the email application screen, there would be no way for the user to provide the DTMF inputs corresponding to the access code. The user might have to memorize or write down the access code while in the email application and then switch back to the voice calling application to enter the access code.

The use of the DTMF key 130 can simplify this access code entry procedure. After the user has established the voice call, switched to the email application, and opened the email that contains the access code, the user can activate the DTMF key 130 to place the device 100 in the DTMF entry mode. Then, while the display associated with the email application is present in the display area 110, the user can use the keypad 120 to enter DTMF inputs corresponding to the access code. When the user has finished entering the access code, the user can deactivate the DTMF key 130. Further inputs made into the keypad 120 while the display associated with the email application is present in the display area 110 would then be accepted as inputs into the email application rather than as DTMF inputs. The activation and deactivation of the DTMF key 130 might be performed in any of the manners described above, such as the pressing of one or more hard keys or soft keys or the selection and de-selection of one or more menu items or icons.

In an alternative of this example, the DTMF inputs might be entered into a virtual keypad 140. In this case, when the DTMF key 130 is activated, the virtual keypad 140 might appear in the display area 110 of the device 100. The virtual keypad 140 might contain touch screen buttons or other input mechanisms that correspond to the buttons on the actual keypad 120. The virtual keypad 140 might appear in only a portion of the display area 110 or might cover the entire display area 110. When the user presses or otherwise selects the touch screen buttons on the virtual keypad 140, the DTMF inputs that are associated with the corresponding buttons on keypad 120 are entered into the device 100. When the user has finished entering DTMF inputs, the user can take appropriate actions to close the virtual keypad 140 and thereby return to the email application.

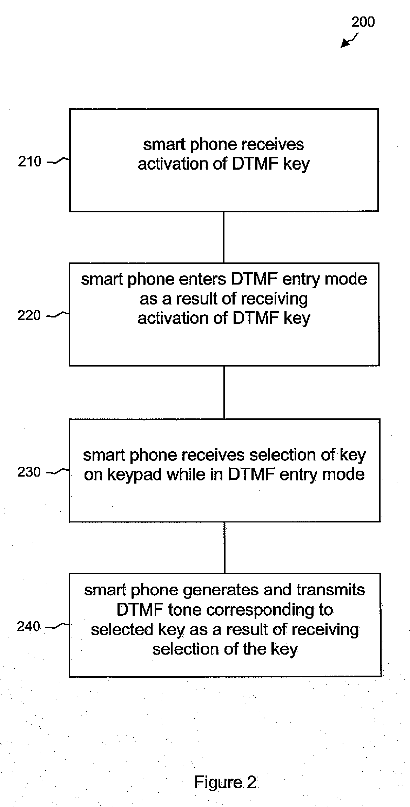

Figure 2 illustrates an implementation of a method 200 for a smart phone to receive a data input. At block 210, the smart phone receives an activation of a DTMF key on the smart phone. At block 220, the smart phone enters a DTMF entry mode as a result of receiving the activation of the DTMF key. At block 230, the smart phone receives a selection of a key on a keypad on the smart phone while in the DTMF entry mode. At block 240, the smart phone generates and transmits a DTMF tone corresponding to the selected key as a result of receiving the selection of the key while in the DTMF entry mode.

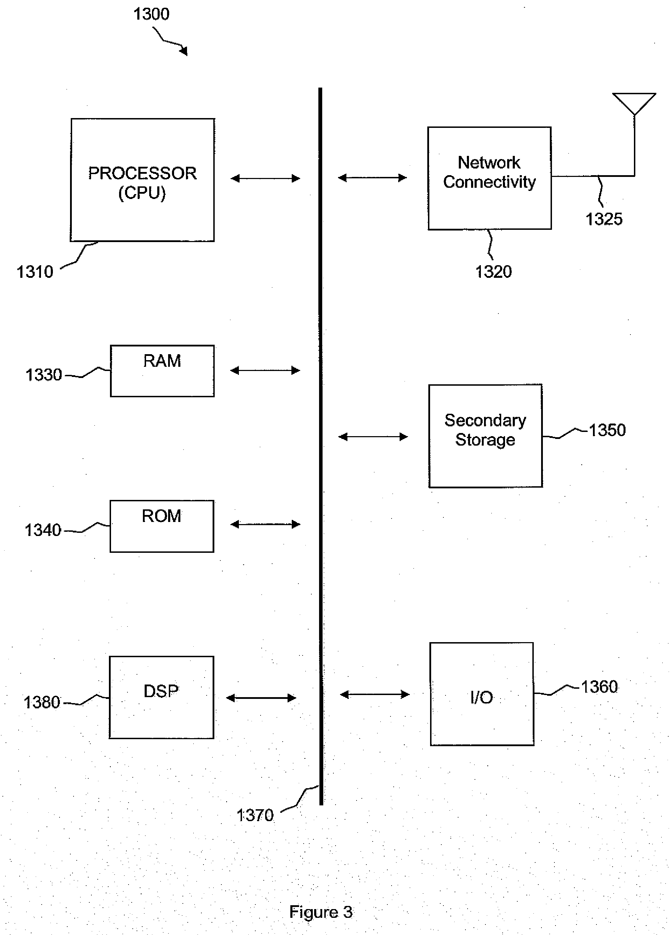

The telecommunications device described above might include a processing component that is capable of executing instructions related to the actions described above. Figure 3 illustrates an example of a system 1300 that includes a processing component 1310 suitable for one or more of the implementations disclosed herein. In addition to the processor 1310 (which may be referred to as a central processor unit or CPU the system 1300 might include network connectivity devices 1320, random access memory (RAM) 1330, read only memory (ROM) 1340, secondary storage 1350, and input/output (1/0) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information.

The network connectivity devices 1320 might also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 might include separate receiving and transmitting units or a single transceiver. Information transmitted or received by the transceiver component 1325 may include data that has been processed by the processor 1310 or instructions that are to be executed by processor 1310. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/Ovices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the I/O devices 1360 instead of or in addition to being a component of the network connectivity devices 1320.

In an implementation, a method is provided for a smart phone to receive a data input. The method comprises the smart phone receiving an activation of a DTMF key on the smart phone, the smart phone entering a DTMF entry mode, the smart phone receiving a selection of a key on a keypad on the smart phone while in the DTMF entry mode, and the smart phone generating and transmitting a DTMF tone corresponding to the selected key.

In another implementation, a smart phone is provided. The smart phone comprises a DTMF key configured such that when the DTMF key is activated and when a key on a keypad on the smart phone is selected, the smart phone generates and transmits a DTMF tone corresponding to the selected key.

In another implementation, a method is provided for entering data into a smart phone. The method comprises activating a DTMF key on the smart phone. The method further comprises selecting a key on a keypad on the smart phone, wherein activating the DTMF key and selecting the key on the keypad cause the smart phone to generate and transmit a DTMF tone corresponding to the selected key.

While several implementations have been provided in the present disclosure, it should be understood that the disclosed systems and methods may be implemented in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method for a smart phone to receive a data input, comprising:
the smart phone receiving an activation of a dual-tone multi-frequency (DTMF) key on the smart phone;
the smart phone entering a DTMF entry mode;
the smart phone receiving a selection of a key on a keypad on the smart phone while in the DTMF entry mode; and
the smart phone generating and transmitting a DTMF tone corresponding to the selected key.

2. The method of claim 1, wherein the DTMF key is at least one of:
a hard key;
a soft key;
an icon; and
a menu item.

3. The method of claim 1, wherein the keypad is at least one of:
a physical keypad; and
an image of a keypad that appears in a display area of the smart phone upon activation of the DTMF key, wherein each key in the image of the key pad corresponds to a key on the physical keypad.

4. The method of claim 1, wherein the smart phone receives the activation of the DTMF key when a display screen other than a display screen associated with a voice calling feature is active in a display area of the smart phone.

5. A smart phone, comprising:
a dual-tone multi-frequency (DTMF) key configured such that when the DTMF key is activated and when a key on a keypad on the smart phone is selected, the smart phone generates and transmits a DTMF tone corresponding to the selected key.

6. The smart phone of claim 5, wherein the DTMF key is at least one of:
a hard key;
a soft key;
an icon; and
a menu item.

7. The smart phone of claim 5, wherein the keypad is at least one of:
a physical keypad; and
an image of a keypad that appears in a display area of the smart phone upon activation of the DTMF key, wherein each key in the image of the key pad corresponds to a key on the physical keypad.

8. The smart phone of claim 5, wherein activation of the DTMF key occurs when a display screen other than a display screen associated with a voice calling feature is active in a display area of the smart phone.

9. A method for entering data into a smart phone, comprising:
activating a dual-tone multi-frequency (DTMF) key on the smart phone; and
selecting a key on a keypad on the smart phone, wherein activating the DTMF key and selecting the key on the keypad cause the smart phone to generate and transmit a DTMF tone corresponding to the selected key.

10. The method of claim 9, wherein the DTMF key is at least one of:
a hard key;
a soft key;
an icon; and
a menu item.

11. The method of claim 9, wherein the keypad is at least one of:
a physical keypad; and
an image of a keypad that appears in a display area of the smart phone upon activation of the DTMF key, wherein each key in the image of the key pad corresponds to a key on the physical keypad.

12. The method of claim 9, wherein activation of the DTMF key occurs when a display screen other than a display screen associated with a voice calling feature is active in a display area of the smart phone.
